# EUROPEAN PATENT SPECIFICATION

(11) **EP 2 032 860 B1**
(45) Date of publication and mention of the grant of the patent: **13.11.2013**
(21) Application number: 07748558.9
(22) Date of filing: 05.06.2007
(51) Int. Cl.: F15B 15/14, F16J 1/02

(54) **DEVICE AT A HYDRAULIC CYLINDER**
VORRICHTUNG AN EINEM HYDRAULIKZYLINDER
DISPOSITIF AU NIVEAU D'UN VERIN HYDRAULIQUE

(30) Priority: 29.06.2006 SE 0601427
(43) Date of publication of application: 11.03.2009
(73) Proprietor: Väderstad-Verken AB, 590 21 Väderstad (SE)
(72) Inventor: GILSTRING, Gert, 590 21 Väderstad (SE)
(74) Representative: Lettström, Richard Wilhelm
(86) International application number: PCT/SE2007/050398
(87) International publication number: WO 2008/002256

(56) References cited:
- EP-A2- 0 142 787
- EP-A2- 0 142 787
- DE-A1- 2 251 202
- DE-C1- 10 156 504
- US-A- 3 832 852

## Description

### Technical area

The present invention relates to a hydraulic cylinder according to the pre-characterising portion of Claim 1.

### Background of the invention

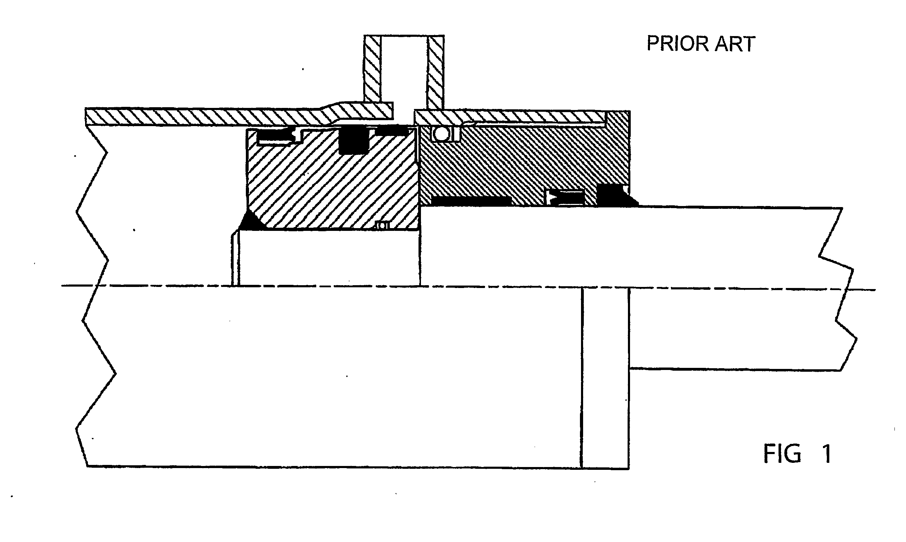

During operation of hydraulic systems, especially within the agricultural machine area, several series-linked hydraulic cylinders are sometimes used to effect simultaneous movements in different parts or sections of the agricultural machine. In such a system, also called a master-slave system, where the piston rod side of a hydraulic cylinder is linked to the piston side of the next hydraulic cylinder etc., problems can arise if all the activated sides in the hydraulic cylinders cannot reach their end position practically simultaneously, i.e. there must be a stray flux to bring about that when for example the piston of the first hydraulic cylinder reaches its end position the second hydraulic cylinder, which has not yet reached its end position, is then also moved to its end position via stray flux from the first hydraulic cylinder. A similar previously known hydraulic cylinder, which is used in a master-slave system, is shown in Fig. 1, where the piston can deviate when the control bands for the piston and the piston rod in the end position come very close to each other and a so-called load effect can arise when the cylinder is carrying a high load or when in certain cases the piston through the often vibratory movement of the machine in the field may orientate itself obliquely and cause the piston to cut into the cylinder pipe.

Other prior art examples are known from EP 0 142 787 A2 and US 3 832 852.

### Aim of the invention

The aim of the present invention is to achieve a hydraulic cylinder that eliminates the above disadvantages.

The aim is achieved through a hydraulic cylinder which has been given the characteristics presented in Claim 1.

Preferred embodiments of the invention have been given the characteristics presented in the sub-claims.

### Summary of the invention

By displacing the control band on the piston in accordance with the invention, i.e. at the end of the piston next the piston side of the hydraulic cylinder instead of beside the piston rod, much more reliable and stable control of the piston and piston rod in the cylinder is achieved, where the controls are no longer arranged close to each other, whereby more reliable control of the piston and piston rod in the hydraulic cylinder is achieved. Through in addition boring a control channel from the piston side past the control band on the piston, a stray flux can stream past the control band and into the opening for hydraulic fluid on the piston rod side so that all hydraulic cylinders that are linked together can reach their end position after the first piston in the assemblage has reached its end position. The stray flux channel also has the advantage that the magnitude of the stray flux can be controlled by the size of the channel. This decreases wear on the main seal since the abrasive oil jet at the stray flux channel can be restricted. With better control of the piston, wear on the main seal is also reduced through the play between piston and cylinder pipe becoming more exact since the piston is not brought to deviate.

### Drawing summary

The invention is described in more detail in the following with reference to the attached drawings which show preferred embodiments:
Fig. 1 shows a partial cross-section through a previously known hydraulic cylinder for an agricultural machine.
Fig. 2 shows a view similar to that in Fig. 1 of a device according to the invention at a hydraulic cylinder.
Fig. 2a shows a detail of Fig. 2 of another embodiment of the stray flux channel.
Fig. 3 shows a perspective view of an agricultural machine, more precisely a harrow, which is provided with hydraulic cylinders with the device according to the invention.
Fig. 4 shows a linkage diagram of the hydraulic cylinders in the agricultural machine in Fig. 3.
Fig. 5 shows a perspective view of an agricultural machine, more precisely a cultivator, which is provided with hydraulic cylinders with the device according to the invention.
Fig. 6 shows a linkage diagram of the hydraulic cylinders in the agricultural machine in Fig. 5.

### Description of a preferred embodiment

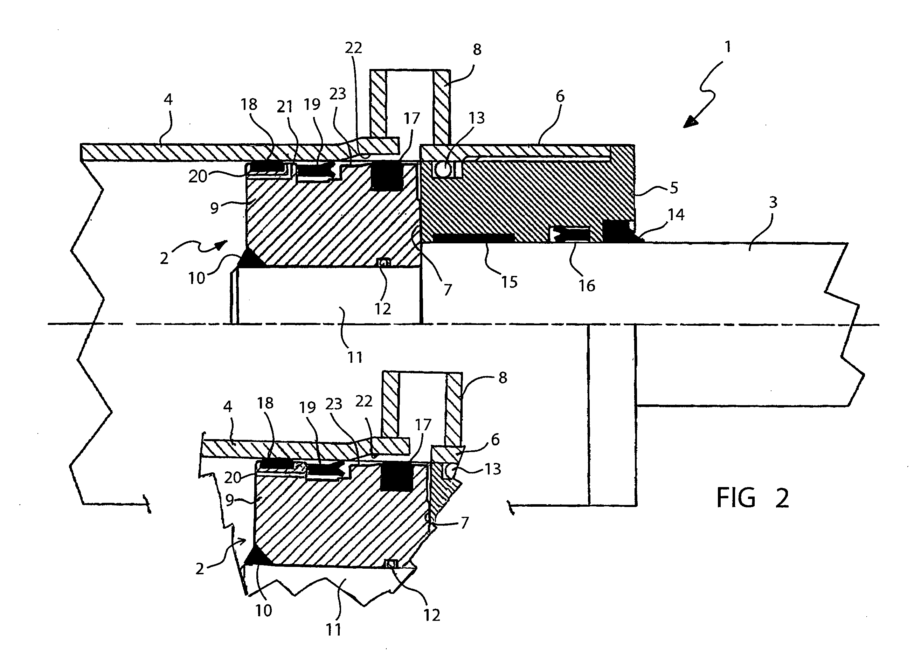

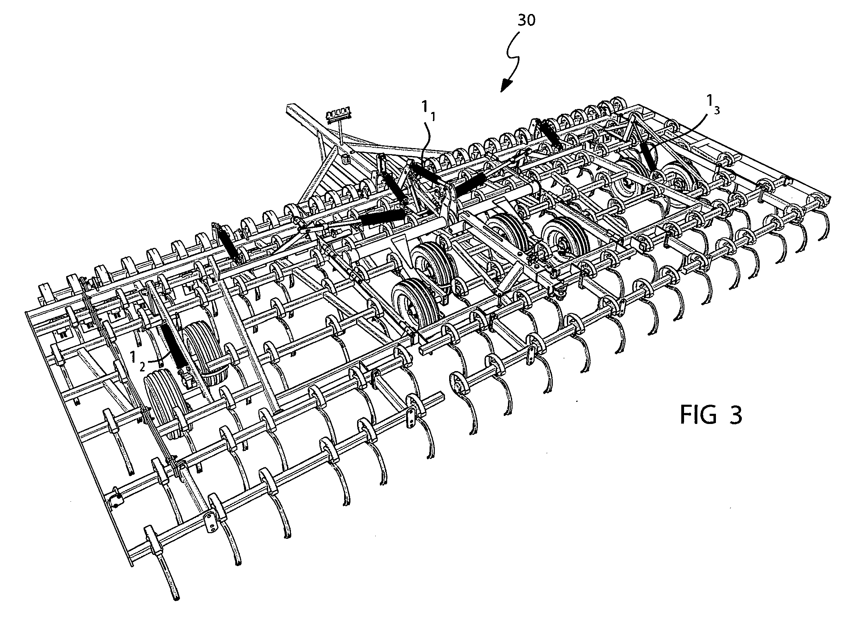

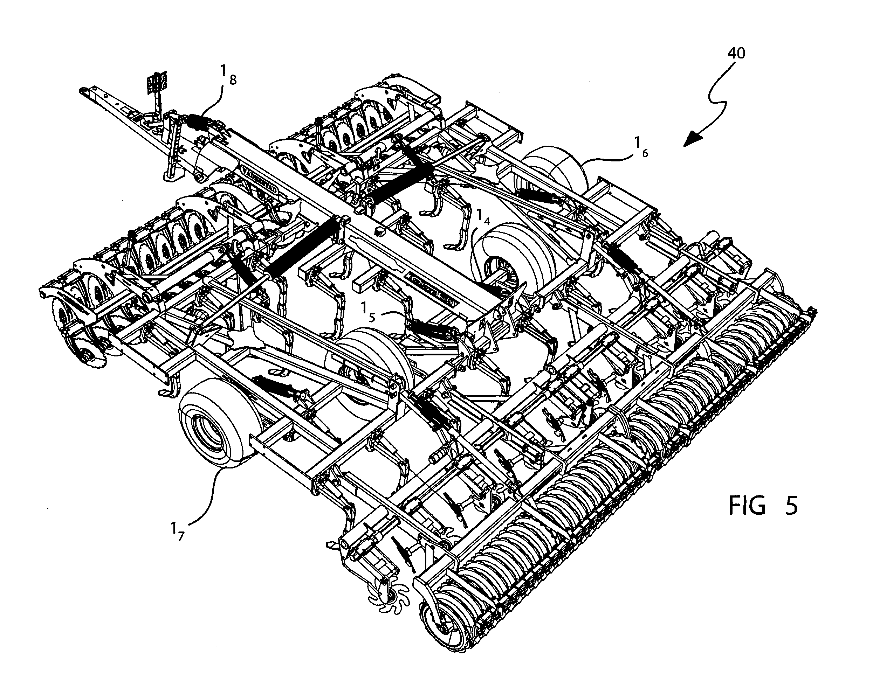

Fig. 2 shows a device according to the invention at a hydraulic cylinder 1 in an agricultural machine, for example a harrow or a cultivator according to Fig. 3 and Fig. 5 respectively. The hydraulic cylinder 1 has a piston 2 and a piston rod 3 fastened at the piston. The piston 2 is displaceable along a cylinder pipe 4 and a cylinder end-part 5 is screwed fast at the top end 6 of the cylinder pipe 4. A port 8 for hydraulic oil is arranged at end 7 of the cylinder. The piston 2 has an external annular part 9, which at 10 is welded fast at an extension 11 of the piston rod 3. A sealing ring 12 is arranged to prevent internal stray flux which can arise through the weld 10. A sealing ring 13 is arranged between the cylinder end-part 5 and the top end 6 of the cylinder pipe 4.

An annular wiping seal 14 is arranged in a recess in the opposite end of the cylinder end-part 5 from the piston 2, intended for wiping against the piston rod 3. An annular control/guide band 15 for the piston rod 3 is arranged in an annular recess at the end of the cylinder end-part 5 next the piston 2 and makes contact with the piston rod 3. Between the wiping seal 14 and the annular guide band 15 an annular Y-seal 16 is arranged in an annular recess in the cylinder end-part 5.

An annular main seal 17 is arranged in a recess in the end of the piston 2 next the piston rod side intended to act as a cylinder ring against the cylinder wall. An annular control/guide band 18 for the piston 2 is arranged in an annular recess in the piston 2 at the end of the piston next the piston side and makes contact with the wall of the cylinder pipe 4. Between the main seal 17 and the annular guide band 18 an annular Y-seal or stray flux seal 19 is arranged in an annular recess in the cylinder wall. At least one bypassing stray flux channel 20 is created in the piston from the piston side of the hydraulic cylinder and runs around the guide band 18 for the piston 2 and discharges into the casing surface 21 of the piston, or more precisely at the side of the stray flux seal 19 next the cylinder pipe 4. Fig. 2a shows a variant where the stray flux channel 20 discharges into the opposite side of the stray flux seal 19 from the cylinder pipe 4. The stray flux seal 19 is so placed in a recess in the piston that it acts as a back valve where stray flux from the stray flux channel 20 is only permitted from the piston side towards the port 8. The cylinder pipe 4 has a convexity 22 in connection with the port 8 in order to create a space, which together with a concavity 23 in the casing surface 21 of the piston forms a connection from the piston side of the hydraulic cylinder 1 via channel 20 and the convexity and concavity 22 and 23 resp. to the port 8. This connection is open when the piston is in or at the end position, as shown in Fig. 2, and is closed during the rest of the movement of the piston 2 in the hydraulic cylinder 1. The reason for creating this connection is to transfer the hydraulic pressure on the piston side of the hydraulic piston 1 to the piston side of the next series-linked piston.

By so placing the guide band 18 for the piston at the end of the piston 2 next the piston side of the hydraulic cylinder, the outcome is that both guide bands 18 and 15 come as far away as possible from each other, especially in the position where the piston has reached its end position towards the end 7 of the cylinder. It is thereby ensured that the piston 2 and the piston rod 3 run more reliably and the risk of deviation of the piston 2 and the piston rod 3 decreases.

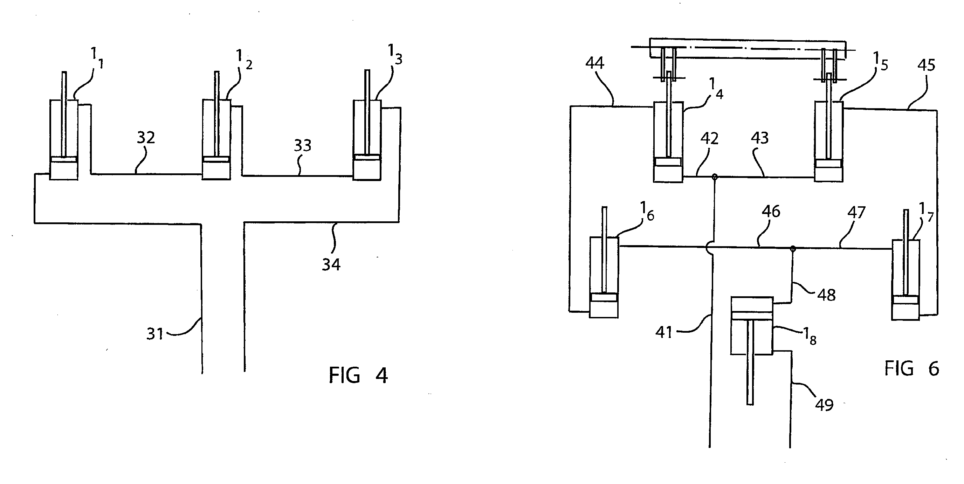

Fig. 4 shows a hydraulic linkage diagram where three hydraulic cylinders 1₁, 1₂ and 1₃ are linked in series and so as to interact in a master-slave linkage. The hydraulic cylinders are of the type shown in Fig. 2 where a stray flux, such as described above with reference to the channel 20, is created between the hydraulic cylinders. Fig. 3 shows an agricultural machine, more precisely a harrow 30, where the hydraulic cylinders have been linked in series according to the linkage diagram shown in Fig. 4. A hydraulic tube 31 linked to the hydraulic system of a not shown tractor leads to the piston side of the first hydraulic cylinder 1₁ and from the piston rod side of this via a tube 32 to the piston side of the next hydraulic cylinder 1₂. From the piston rod side of the hydraulic cylinder 1₂ a tube 33 leads to the piston side of the next hydraulic cylinder 1₃ and from the piston rod side of this a tube 34 leads back to the hydraulic system of the tractor.

Fig. 6 shows a hydraulic linkage diagram where five hydraulic cylinders 1₄, 1₅, 1₆, 1₇ and 1₈ are linked in series and so as to interact in a master-slave linkage. The hydraulic cylinders are of the type shown in Fig. 2 where a stray flux, such as described above with reference to the channel 20, is created between the hydraulic cylinders. Fig. 5 shows an agricultural machine, more precisely a cultivator 40, where the hydraulic cylinders have been linked in series according to the linkage diagram shown in Fig. 6. A hydraulic tube 41 from the hydraulic system of a not shown tractor leads via branch tubes 42 and 43 to the piston sides of the first parallel-linked hydraulic cylinders 1₄ and 1₅, resp., and from the piston rod sides of these via tubes 44 and 45 to the piston sides of the next hydraulic cylinders 1₆ and 1₇. From the piston rod sides of the hydraulic cylinders 1₆ and 1₇ run two branch tubes 46 and 47, which are combined together into one tube 48, which is connected to the piston side of the next hydraulic cylinder 1₈ and from the piston rod side of this a tube 49 leads back to the hydraulic system of the tractor. As shown in Fig. 6, the cylinder volume in cylinder 1₈ is equal to the cylinder volume of the hydraulic cylinders 1₆ and 1₇ since the hydraulic flux through each one of the branch tubes 42 - 47 is halved in the hydraulic cylinders 1₄ - 1₇ in relation to the hydraulic pressure in the inflow 48 to the hydraulic cylinder 1₈.

The invention does not have to be applied on all the cylinders in a circuit but only those that are exposed to high loads, for example the hydraulic cylinder 1₂ in the harrow in Fig. 3 and the hydraulic cylinders 1₄ and 1₅ in the cultivator in Fig. 5. These hydraulic cylinders bear almost the entire machine weight of the resp. machine in the transport position.

Even though with the embodiment described above a channel 20 is shown bypassing the guide band 18 on the piston 2, it is possible within the framework of the attached claims to create two or more channels around the periphery of the piston. This can be advantageous in ensuring operation if one channel becomes blocked by dirt or other particles.

The invention can naturally also be applied on agricultural machines other than those shown in the drawings.

Although one embodiment of the invention has been described above, the device according to the invention can be modified within the framework of the attached claims.

## Claims

1. Hydraulic cylinder for a predetermined number of hydraulic cylinders (1₁ - 1₃, 1₄ - 1₈) co-linked into a hydraulic cylinder system according to the master-slave principle for an agricultural machine (30 and 40), said hydraulic cylinder (1) comprising a piston (2), a piston rod (3), a cylinder pipe (4), a guide band (18) arranged on said piston (2), which band constitute the controls for the piston in the hydraulic cylinder, said guide band (18) for the piston (2) being arranged at the end of the piston next the piston side of the hydraulic cylinder (1), and at least one stray flux channel (20) provided from said piston side to discharge at a place past the opposite end of the guide band from the piston side of the hydraulic cylinder (1), preferably for connection with its casing surface, **characterised in that** it further comprises a guide band (15) arranged for said piston rod (3), and **in that** a stray flux seal (19), which is of such a nature that it can be brought at a predetermined pressure to discharge flux to a port (8) for hydraulic fluid, is arranged on the side of the guide band (18) on the piston (2) that is next the piston rod (3).

2. Hydraulic cylinder according to Claim 1, **characterised in that** said stray flux channel (20) is arranged to discharge at the side of the stray flux seal (19) next the cylinder pipe (4).

3. Hydraulic cylinder according to Claim 1, **characterised in that** said stray flux channel (20) discharges at the opposite side of the stray flux seal (19) from the cylinder pipe (4).

4. Hydraulic cylinder according to any one of Claims 1 - 3, **characterised in that** the stray flux channel (20) at said stray flux seal (19), when the piston (2) has reached or almost reached its end position in the piston rod side of the hydraulic cylinder (1), is connected to the connection port (8) of the piston rod side.

5. Hydraulic cylinder according to any one of Claims 1 - 4, **characterised in that** the seal (19) is adapted at a predetermined pressure to allow stray flux from the piston side of the hydraulic cylinder (1) to the piston rod side, when the piston (2) has reached or almost reached its end position on the piston rod side of the hydraulic cylinder (1).

## Patentansprüche

1. Hydraulikzylinder für eine vorbestimmte Anzahl von Hydraulikzylindern (1₁ - 1₃, 1₄ - 1₈), die gemäß dem Master-Slave Prinzip zu einem Hydraulikzylindersystem für eine landwirtschaftliche Maschine (30 und 40) miteinander gekoppelt sind, wobei der Hydraulikzylinder (1) aufweist: einen Kolben (2), eine Kolbenstange (3), ein Zylinderrohr (4), ein Führungsband (18), das an dem Kolben (2) angeordnet ist, wobei das Band die Steuerungen für den Kolben im Hydraulikzylinder darstellt, wobei das Führungsband (18) für den Kolben (2) am Ende des Kolbens nächst der Kolbenseite des Hydraulikzylinders (1) angeordnet ist, und zumindest einen Streuflusskanal (20), der von der Kolbenseite her vorgesehen ist, um an einer Stelle hinter dem von der Kolbenseite des Hydraulikzylinders (1) entgegengesetzten Ende des Führungsbands abzuleiten, bevorzugt zur Verbindung mit dessen Gehäuseoberfläche,
**dadurch gekennzeichnet, dass** er ferner ein Führungsband (15) aufweist, das für die Kolbenstange (3) angeordnet ist, und dass eine Streu-flussdichtung (19), die eine solche Eigenschaft hat, dass sie bei einem vorbestimmten Druck dazu gebracht werden kann, Fluss zu einer Öffnung (8) für Hydraulikfluid abzuleiten, an der Seite des Führungsbands (18) an dem Kolben (2) angeordnet ist, die der Kolbenstange (3) am nächsten ist.

2. Hydraulikzylinder nach Anspruch 1, **dadurch gekennzeichnet, dass** der Streuflusskanal (20) angeordnet ist, um an der Seite der Streuflussdichtung (19) nächst dem Zylinderrohr (4) abzuleiten.

3. Hydraulikzylinder nach Anspruch 1, **dadurch gekennzeichnet, dass** der Streuflusskanal (20) an der vom Zylinderrohr (4) entgegengesetzten Seite der Streuflussdichtung (19) ableitet.

4. Hydraulikzylinder nach einem der Ansprüche 1 - 3, **dadurch gekennzeichnet, dass** der Streuflusskanal (20) an der Streuflussdichtung (19), wenn der Kolben (2) seine Endposition an der Kolbenstangenseite des Hydraulikzylinders (1) erreicht oder angenähert erreicht hat, mit der Verbindungsöffnung (8) der Kolbenstangenseite verbunden ist.

5. Hydraulikzylinder nach einem der Ansprüche 1 - 4, **dadurch gekennzeichnet, dass** die Dichtung (19) dazu ausgelegt ist, bei einem vorbestimmten Druck einen Streufluss von der Kolbenseite des Hydraulikzylinders (1) zur Kolbenstangenseite hin zu erlauben, wenn der Kolben (2) seine Endposition an der Kolbenstangenseite des Hydraulikzylinders (1) erreicht oder angenähert erreicht hat.

## Revendications

1. Vérin hydraulique pour un nombre prédéterminé de vérins hydrauliques (1₁ - 1₃, 1₄ - 1₈) co-liés dans un système de vérins hydrauliques selon le principe maître-esclave pour une machine agricole (30 et 40), ledit vérin hydraulique (1) comprenant un piston (2), une tige de piston (3), un corps creux (4) de cylindre, une bande de guidage (18) disposée sur ledit piston (2), laquelle bande constitue la commande pour le piston dans le vérin hydraulique, ladite bande de guidage (18) pour le piston (2) étant disposée à l'extrémité du piston proche du côté piston du vérin hydraulique (1), et au moins un conduit pour flux de dispersion (20) aménagé depuis ledit côté de piston, permettant un écoulement en un endroit situé au-delà de l'extrémité opposée de la bande de guidage depuis le côté piston du vérin hydraulique (1), de préférence pour une liaison avec sa surface d'enveloppe, **caractérisé en ce qu'**il comprend en outre une bande de guidage (15) agencée pour ladite tige de piston (3), et **en ce qu'**un joint (19) de flux de dispersion, qui est d'une nature telle qu'il puisse être porté à une pression prédéterminée pour faire s'écouler le flux vers un orifice (8) pour le fluide hydraulique, est agencé sur le côté de la bande de guidage (18) sur le piston (2) qui se trouve du côté de la tige de piston (3).

2. Cylindre hydraulique selon la revendication 1, **caractérisé en ce que** ledit conduit pour flux de dispersion (20) est agencé pour déboucher sur le côté du joint (19) de flux de dispersion situé du côté du corps creux (4) de cylindre.

3. Cylindre hydraulique selon la revendication 1, **caractérisé en ce que** ledit conduit (20) de flux de dispersion débouche sur le côté du joint (19) de flux de dispersion qui est opposé au corps creux (4) de cylindre.

4. Cylindre hydraulique selon l'une quelconque des revendications 1 à 3, **caractérisé en ce que** le conduit (20) de flux de dispersion au niveau dudit joint (19) de flux de dispersion, lorsque le piston (2) a atteint ou a pratiquement atteint sa position de fin de course sur le côté de la tige de piston du vérin hydraulique (1), est relié à l'orifice de raccordement (8) du côté tige de piston.

5. Cylindre hydraulique selon l'une quelconque des revendications 1 à 4, **caractérisé en ce que** le joint d'étanchéité (19) est adapté, à une pression prédéterminée, pour permettre au flux de dispersion de se produire, depuis le côté piston du vérin hydraulique (1) vers le côté tige de piston, lorsque le piston (2) a atteint ou pratiquement atteint sa position de fin de course sur le côté tige de piston du vérin hydraulique (1).
